# EUROPÄISCHE PATENTSCHRIFT

(11) **EP 2 174 898 B1**
(45) Veröffentlichungstag und Bekanntmachung des Hinweises auf die Patenterteilung: **12.03.2014**
(21) Anmeldenummer: 09012475.1
(22) Anmeldetag: 01.10.2009
(51) Int. Cl.: B65G 65/28

(54) **Transportsystem zum Transport und Abladen von Schüttgut, insbesondere von Beton**
Transport system for conveying and unloading bulk, in particular concrete
Système de transport et de déchargement de matériau en vrac, en particulier de béton

(30) Priorität: 10.10.2008 DE 102008051162
(43) Veröffentlichungstag der Anmeldung: 14.04.2010
(73) Patentinhaber: Liebherr-Mischtechnik GmbH, 88427 Bad Schussenried (DE)
(72) Erfinder: Rudner, Fabian, 88123 Ravensburg (DE); Halder, Arthur, 88356 Ostrach (DE)
(74) Vertreter: Laufhütte, Dieter

(56) Entgegenhaltungen:
- DE-A1- 2 426 986
- DE-A1- 3 732 671
- DE-B- 1 286 456

## Beschreibung

Die vorliegende Erfindung betrifft ein Transportsystem zum Transport von Schüttgut, insbesondere von flüssigem oder halbflüssigem Schüttgut, insbesondere von Beton, mit einem Transportband zur Beförderung des Schüttguts zu einer Abladestelle, wobei ein um eine vertikale Drehachse drehbarer Dreharm vorgesehen ist, welcher das Schüttgut zu seinem freien Ende transportiert und dort ablädt.

Solche Transportsysteme kommen insbesondere auf großen Baustellen wie z. B. Staudämmen zum Einsatz, auf welchen große Mengen von Beton benötigt werden. Dieser wird dann üblicherweise in einem zentralen Mischwerk zubereitet und von dort über das Transportsystem zur jeweiligen Abladestelle transportiert. Der Dreharm des Transportsystems sorgt dabei dafür, dass der Beton über einen größeren Bereich verteilt werden kann.

Bei einem Fortschreiten der Bauarbeiten muss das Transportsystem jedoch an die sich verändernde Baustelle angepasst werden und die Abladestelle von Zeit zu Zeit an einen anderen Ort versetzt werden. Der Dreharm wird hierfür bei einigen bekannten Systemen auf einem mobilen Arbeitsgerät montiert, um den Radius des Transportsystems zu vergrößern. Ist der Dreharm dagegen auf einem stationären Stützpfeiler montiert, muss der Dreharm zum Umbau des Transportsystems abmontiert und an einem anderen stationären Stützpfeiler wieder montiert werden. Dies ist bei bekannten Transportsystemen oftmals umständlich und mit hohem Aufwand verbunden.

Aus der DE 2 426 986 ist eine Vorrichtung zur Förderung dickflüssiger Massen zu entfernten hochgelegenen Punkten einer Baustelle bekannt. Die Vorrichtung umfasst einen seitlich am Kranturm angebrachten Austragsförderer.

Aufgabe der vorliegenden Erfindung ist es daher, ein Transportsystem zum Transport von Schüttgut, insbesondere von Beton, zur Verfügung zu stellen, welches einfach umzubauen und hinsichtlich seiner Handhabung verbessert ist.

Diese Aufgabe wird erfindungsgemäß von einem Transportsystem gemäß Anspruch 1 gelöst. Bei dem erfindungsgemäßen Transportsystem von Schüttgut, insbesondere von Beton, mit einem Transportband zur Beförderung des Schuttguts zu einer Abladestelle ist dabei ein um eine vertikale Drehachse drehbarer Dreharm vorgesehen, welcher Schüttgut zu seinem freien Ende transportiert und dort ablädt. Erfindungsgemäß ist dabei der Dreharm an einer Halterung gelagert, welche so an einem stationären Stützpfeiler angeordnet oder anordenbar ist, dass die Drehachse des Dreharms exzentrisch zum Stützpfeiler verläuft. Vorteilhafterweise ist der Dreharm dabei von oben gesehen in wenigstens einer Drehstellung seitlich neben dem Stützpfeiler angeordnet. Durch die exzentrische bzw. seitliche Anordnung des Dreharms neben dem Stützpfeiler auf einer entsprechenden Halterung wird dabei die Montage und Demontage des Dreharms am Stützpfeiler erheblich vereinfacht. Weiterhin erlaubt die erfindungsgemäße exzentrische bzw. seitliche Anordnung des Dreharms eine gute Drehbarkeit des Dreharms um seine vertikale Drehachse.

Der erfindungsgemäße Dreharm weist dabei vorteilhafterweise ein Transportband auf, welches im Bereich der Drehachse Schüttgut von einem weiteren Transportband aufnimmt und zum freien Ende des Dreharms transportiert. Dort ist vorteilhafterweise eine Abladevorrichtung vorgesehen, über welche das Schüttgut z. B. auf einen Laster aufgeladen werden kann. Die Abladevorrichtung kann dabei z. B. einen vertikal verlaufenden Schlauch umfassen. Weiterhin vorteilhafterweise umfasst der Dreharm auf der der Abladevorrichtung entgegengesetzten Seite ein Ge-gengewicht. Vorteilhafterweise ist dabei die tragende Konstruktion des Dreharms als Gitterkonstruktion ausgeführt und ist weiterhin vorteilhafterweise aus Gitterstücken zusammengesetzt.

Vorteilhafterweise ist der Dreharm in einer Drehdurchführung angeordnet, welche über einen ersten Drehkranz auf der Halterung gelagert ist und über einen zweiten Drehkranz ein Ende einer Bandbrücke trägt, welche das Schüttgut zum Dreharm transportiert. Hierdurch kann der Dreharm nicht nur über den ersten Drehkranz gegenüber dem Stützpfeiler gedreht werden, sondern auch über den zweiten Drehkranz gegenüber der Bandbrücke, über welche das Schüttgut zum Dreharm transportiert wird. Die Bandbrücke ist dabei vorteilhafterweise als Gitterkonstruktion ausgeführt, in welcher ein Transportband zur Beförderung des Schüttguts vorgesehen ist. Das Transportband endet dabei vorteilhafterweise oberhalb der Drehdurchführung, durch welche der Dreharm hindurchgeführt ist, so dass das Schüttgut vom Transportband der Bandbrücke auf das Transportband des Dreharmes hinabfällt. Durch die Drehdurchführung kann die Bandbrücke dabei stationär angeordnet sein, während der Dreharm auch gegenüber der Bandbrücke drehbar bleibt.

Vorteilhafterweise ist dabei erfindungsgemäß die Halterung so am stationären Stützpfeiler angeordnet oder anordenbar, dass dass der Dreharm höher angeordnet ist als das obere Ende des Stützpfeilers, so dass er über den Stützpfeiler gedreht werden kann. Hierfür kann z.B. die Drehdurchführung höher angeordnet seien als das obere Ende des Stützpfeilers. Diese Anordnung erlaubt eine Drehbarkeit des Dreharms um 360°. Verläuft die oberhalb des Dreharms angeordnete Bandbrücke allerdings mit einem gewissen Winkel zur Horizontalen, kann dies die Drehbarkeit des Dreharmes etwas begrenzen, so dass sich z. B. ein Drehwinkel von ca. 300° ergibt.

Ist dagegen die Halterung so am Stützpfeiler angeordnet, dass der Dreharm nicht über das obere Ende des Stützpfeilers hinwegschwenken kann, ergibt sich ein deutlich geringerer Drehbereich, wobei der maximale Drehwinkel von dem Abstand des Dreharms vom Stützpfeiler abhängt. Vorteilhafterweise ist jedoch auch dann der Drehwinkel größer als 50°.

Vorteilhafterweise ist erfindungsgemäß der Stützpfeiler aus mehreren Elementen, insbesondere aus mehreren Gitterelementen aufgebaut, so dass die Höhe des Stützpfeilers durch Aufsetzen weiterer Elemente vergrößert werden kann. Ein solcher Aufbau des Stützpfeilers aus mehreren Elementen erlaubt eine flexible Anpassung der Höhe des Stützpfeilers. Vorteilhafterweise ist der Stützpfeiler dabei aus Gitterstücken, wie sie z. B. für den Turm von Turmdrehkranen eingesetzt werden, aufgebaut.

Vorteilhafterweise kann erfindungsgemäß weiterhin mindestens ein Element auf den Stützpfeiler aufgesetzt werden, ohne die Halterung und/oder den Dreharm zu demontieren. Dadurch, dass auf das obere Ende des Dreharmes ein weiteres Element, insbesondere ein Gitterelement, aufgesetzt werden kann, ohne dass die Halterung bzw. der Dreharm hierzu demontiert werden müsste, kann die Höhe des Stützpfeilers auch bei montiertem Dreharm verändert werden. Dies erlaubt einen erheblich flexibleren Umbau des erfindungsgemäßen Transportsystems. Insbesondere kann dabei das auf das obere Ende des Stützpfeilers aufgesetzte Element zum Um- oder Abbau des Dreharmes eingesetzt werden.

Das erfindungsgemäße Transportsystem kann noch weitere Elemente umfassen, welche den Transportweg verlängern.

Vorteilhafterweise umfasst das erfindungsgemäße Transportsystem dabei einen zweiten Stützpfeiler, an welchem eine zweite Halterung angeordnet ist, wobei die Halterung die Enden zweier Bandbrücken trägt. Vorteilhafterweise ist dabei auch der zweite Stützpfeiler stationär. Weiterhin vorteilhafterweise sind die Enden der zwei Bandbrücken dabei über die Halterung von oben gesehen seitlich neben dem Stützpfeilers angeordnet. Über die zweite Halterung können so zwei Bandbrücken, welche jeweils mit Transportbändern zum Transport des Schüttguts ausgerüstet sind, miteinander verbunden werden, wobei das Schüttgut von einem Transportband auf das andere umgeleitet wird. Durch den zweiten Stützpfeiler mit der entsprechenden Halterung und den zwei Bandbrücken kann so der Aktionsradius des erfindungsgemäßen Transportsystems erweitert werden. Insbesondere kann dabei über den Einsatz mehrerer Stützpfeiler und gegebenenfalls mehrerer Bandbrücken der Aktionsradius erweitert werden.

Vorteilhafterweise ist dabei die eine Bandbrücke in einer Drehdurchführung auf der zweiten Halterung angeordnet, so dass diese Bandbrücke gegenüber der zweiten Halterung und/oder der anderen Bandbrücke um eine vertikale Drehachse drehbar ist. So kann z. B. die Bandbrücke gedreht und mit ihrem anderen Ende an einem anderen stationären Stützpfeiler montiert werden, um das Schüttgut zu einer anderen Stelle zu transportieren, ohne dass die zweite Halterung oder die andere Bandbrücke demontiert werden müßte.

Vorteilhafterweise ist dabei die zweite Halterung für die Bandbrücken baugleich zur Halterung für den Dreharm. Hierdurch kann die Halterung flexibel entweder für Dreharme oder Bandbrücken eingesetzt werden. Die Anpassung an den jeweiligen Einsatzzweck erfolgt dann vorteilhafterweise über eine entsprechende Drehdurchführung, welche entweder an dem Dreharm oder an eine Bandbrücke angepaßt ist.

Weiterhin vorteilhafterweise umfasst das erfindungsgemäße Transportsystem eine Hebevorrichtung zum Anheben des Dreharms und/oder der Bandbrücke. Durch diese Hebevorrichtung kann der Dreharm und/oder die Bandbrücke angehoben werden, um das erfindungsgemäße Transportsystem umzubauen.

Vorteilhafterweise ist dabei die Hebevorrichtung an einem Stützpfeiler anordenbar, insbesondere an einem Element des Stützpfeilers, welches hierfür auf dem oberen Ende des Stützpfeilers aufsetzbar ist. Hierdurch kann die Halterung des Dreharms bzw. der Bandbrücke im Normalbetrieb so am Stützpfeiler angeordnet werden, dass der Dreharm bzw. die Bandbrücke über den Stützpfeiler hinweg drehbar ist. Zum Umbau kann dann ein weiteres Element auf den Stützpfeiler aufgesetzt werden, an welchem die Hebevorrichtung angeordnet wird, um den Dreharm bzw. die Bandbrücke anzuheben.

Weiterhin vorteilhafterweise ist erfindungsgemäß die Halterung des Dreharms bzw. der Bandbrücke in unterschiedlichen Höhen am stationären Stützpfeiler montierbar. Vorteilhafterweise handelt es sich dabei um eine Stahlkonstruktion, welche den Stützpfeiler umfasst und eine Plattform zur Montage des Dreharms bzw. der Bandbrücke neben dem Stützpfeiler aufweist. Die Plattform ist dabei vorteilhafterweise über einen schräg verlaufenden Stützarm gegenüber dem Stützpfeiler abgestützt.

Die vorliegende Erfindung umfasst weiterhin einen Stützpfeiler für ein Transportsystem zum Transport von Schüttgut, insbesondere von Beton, zum Abstützen mindestens einer Bandbrücke und/oder mindestens eines Dreharms, wobei der Stützpfeiler eine Halterung für die Bandbrücke und/oder den Dreharm aufweist, welche am Stützpfeiler so montiert ist, dass die Bandbrücke und/oder der Dreharm von oben gesehen neben dem Stützpfeiler angeordnet sind, wobei die Bandbrücke und/oder der Dreharm höher angeordnet sind als das obere Ende des Stützpfeilers. Dabei ist der Stützpfeiler durch ein weiteres Element, welches am oberen Ende des Stützpfeilers montierbar ist, über die Halterung hinaus verlängerbar.

Hierdurch ist es möglich, im Normalbetrieb die Bandbrücke bzw. den Dreharm über das obere Ende des Stützpfeilers hinweg zu drehen, so dass sich ein großer Bereich ergibt, in welchem der Dreharm bzw. die Bandbrücke gedreht werden können. Durch das weitere Element, welches am oberen Ende des Stützpfeilers montierbar ist, kann der Stützpfeiler jedoch über die Halterung hinaus verlängert werden, z. B. um die Montage oder Demontage des Dreharms oder der Bandbrücke zu vereinfachen oder die Höhe des Stützpfeilers zu vergrößern. Die Tatsache, dass der Dreharm bzw. die Bandbrücke von oben gesehen neben dem Stützpfeiler angeordnet sind, erlaubt dabei die Montage des weiteren Elements am oberen Ende des Stützpfeilers, ohne dass hierfür die Halterung bzw. die Bandbrücke oder der Dreharm bereits demontiert sein müßten.

Weiterhin vorteilhafterweise handelt es sich bei dem erfindungsgemäßen Stützpfeiler dabei um einen Stützpfeiler für ein Transportsystem, wie es weiter oben beschrieben wurde.

Die vorliegende Erfindung umfasst weiterhin ein Verfahren zum Umbau eines Transportsystems zum Transport von Schüttgut, insbesondere von Beton, mit einer Bandbrücke und/oder einem Dreharm mit einem Transportband zur Beförderung des Schüttguts, wobei die Bandbrücke und/oder der Dreharm neben dem Stützpfeiler angeordnet ist und das Anheben der Bandbrücke und/oder des Dreharms über eine am Stützpfeiler oberhalb der Bandbrücke und/oder des Dreharms angeordneten Hebeeinrichtung erfolgt. Durch die seitliche Anordnung der Bandbrücke bzw. des Dreharms können diese problemlos über die Hebeeinrichtung angehoben werden. Dies erlaubt z. B. die Montage oder Demontage einer anderen Drehdurchführung oder die Montage der Halterung in einer anderen Höhe.

Vorteilhafterweise wird dabei zum Anheben der Bandbrücke und/oder des Dreharms mindestens ein Element, insbesondere ein Gitterelement, auf den Stützpfeiler aufgesetzt, um diesen über die Halterung hinaus zu verlängern, wobei die Hebeeinrichtung an diesem Element angeordnet ist. Hierdurch kann der Dreharm bzw. die Bandbrücke im Normalbetrieb über den Stützpfeiler hinweg geschwenkt werden. Zum erfindungsgemäßen Umbau des Transportsystems kann dagegen der Stützpfeiler über das mindestens eine weitere Element verlängert werden, um die Hebeeinrichtung am Stützpfeiler oberhalb des Dreharms bzw. der Bandbrücke anordnen zu können. Hierdurch ergibt sich eine besonders flexible Ausgestaltung des Umbaus des erfindungsgemäßen Transportsystems, womit z. B. der Dreharm von einem Stützpfeiler an einen anderen Stützpfeiler versetzt werden kann oder die Höhe der Anordnung des Dreharms oder der Bandbrücke am Stützpfeiler verändert werden kann, indem z. B. die Halterung demontiert und in einer anderen Höhe am Stützpfeiler wieder montiert wird.

Weiterhin vorteilhafterweise wird das Element, an welchem die Hebeeinrichtung montiert wurde, nach dem Umbau des Transportsystems wieder abgebaut. Hierdurch wird wieder die volle Drehbarkeit des Dreharms bzw. der Bandbrücke hergestellt.

Vorteilhafterweise wird dabei erfindungsgemäß nach dem Anheben der Bandbrücke und/oder des Dreharms eine Drehdurchführung montiert, demontiert und/oder ausgetauscht, woraufhin die Bandbrücke und/oder der Dreharm wieder abgesenkt wird.

Vorteilhafterweise wird das erfindungsgemäße Verfahren zum Umbau eines Transportsystems dabei zum Umbau eines Transportsystems, wie sie weiter oben beschrieben wurde, eingesetzt.

Die vorliegende Erfindung wird nun anhand von Ausführungsbeispielen sowie Zeichnungen näher dargestellt. Dabei zeigen:
- Figur 1:: ein Ausführungsbeispiel des erfindungsgemäßen Transportsystems mit einem Ausführungsbeispiel eines erfindungsgemäßen Stützpfeilers in einer Seitenansicht,
- Figur 2:: das Ausführungsbeispiel des erfindungsgemäßen Transportsystems in einer Draufsicht,
- Figuren 3a, 3b:: die Drehwinkel des Dreharms bei alternativen Ausgestaltungen des erfindungsgemäßen Transportsystems,
- Figur 4a:: eine weitere Seitenansicht eines Teils des erfindungsgemäßen Transportsystems,
- Figur 5a:: eine Schnittansicht eines erfindungsgemäßen Transportsystems zur Verdeutlichung eines Ausführungsbeispiels des erfindungsgemäßen Verfahrens zum Umbau des Transportsystems,
- Figuren 6, 7:: zwei weitere Seitenansichten des erfindungsgemäßen Transportsystems zur Verdeutlichung des erfindungsgemäßen Verfahrens,
- Figur 8a:: eine Schnittansicht durch das Ausführungsbeispiel des erfindungsgemäßen Transportsystems und
- Figur 9:: eine Schnittansicht durch eine weitere Ausführung des erfindungsgemäßen Transportsystems.

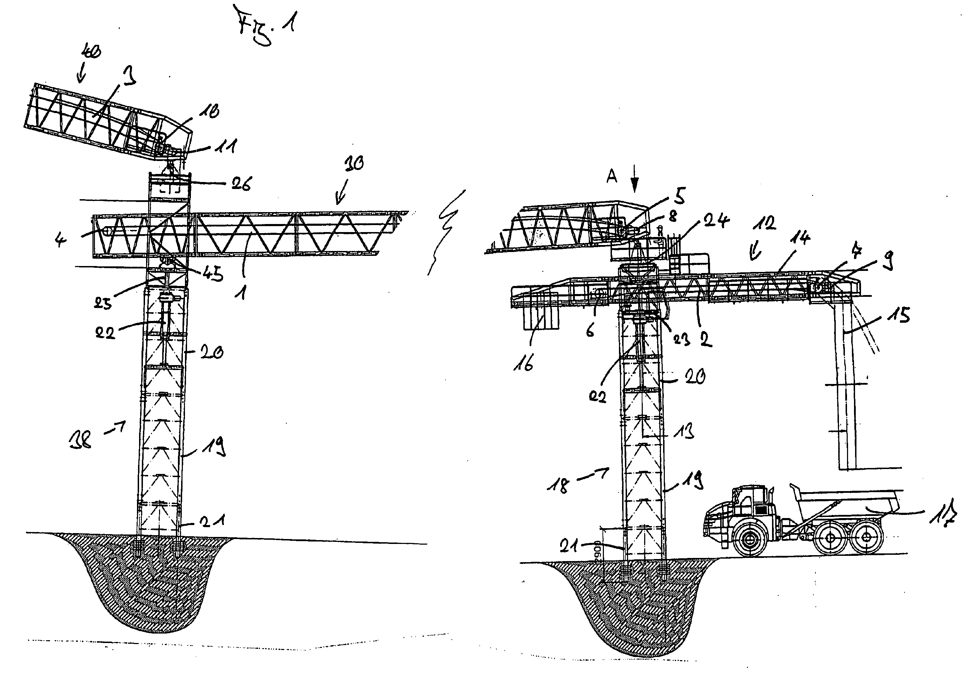

Figur 1 zeigt ein Ausführungsbeispiel eines erfindungsgemäßen Transportsystems zum Transport von Schüttgut. Insbesondere dient das erfindungsgemäße Transportsystem dabei dem Transport von Beton, insbesondere von flüssigem oder halbflüssigem Beton auf einer Baustelle. Dabei wird der Beton z. B. bei der Konstruktion von Staudämmen über weite Strecken transportiert, um diesen von einer Mischanlage, wo der Beton hergestellt wird, zu einer Abladestelle zu transportieren. Hierfür weist das Transportsystem Transportbänder 1, 2 und 3 auf, über welche der Beton zu einer Abladestelle transportiert wird. Die Transportbänder 1 und 3 sind dabei in Bandbrücken 30 und 40 angeordnet und laufen über Rollen 4 und 5 bzw. 10 endlos um. Die Transportbänder 1 und 3 werden dabei über Motoren 8 und 11 angetrieben.

Die Bandbrücken 30 und 40 werden über zwei stationäre Stützpfeiler 18 und 38 getragen. Der Beton wird dabei über die Bandbrücke 40 zum Stützpfeiler 38 transportiert, wo er auf die Bandbrücke 30 läuft, welche den Beton ihrerseits zum Stützpfeiler 18 transportiert. Am Stützpfeiler 18 ist dabei ein Dreharm 12 vorgesehen, welcher um eine vertikale Drehachse 13 drehbar ist. Im Dreharm 12 ist ein weiteres Transportband 2 vorgesehen, über welches der Beton zum freien Ende des Dreharms transportiert und dort über eine Abladevorrichtung 15 abgeladen wird. Das Transportband 2 des Dreharms 12 läuft dabei über Rollen 6 und 7 endlos um und wird über einen Motor 9 angetrieben. Der Dreharm 12 weist auf der der Abladeseite gegenüberliegenden Seite ein Gegengewicht 16 auf.

Erfindungsgemäß ist der Dreharm 12 dabei über eine Halterung 22 so am Stützpfeiler 18 angeordnet, dass seine Drehachse exzentrisch zum Stützpfeiler verläuft. Dabei ist der Dreharm 12 von oben gesehen in einem gewissen Drehbereich neben dem Stützpfeiler 18 angeordnet. Hierzu ist die Halterung 22, auf welcher der Dreharm 12 gelagert ist, seitlich an dem stationären Stützpfeiler 18 angeordnet. Die exzentrische bzw. seitliche Anordnung des Dreharms 12 zum Stützpfeiler 18 ergibt Vorteile bezüglich der Drehbarkeit des Dreharms 12 sowie bezüglich des Umbaus des Transportsystems.

Da auf großen Baustellen wie z. B. Staudämmen der Beton nicht immer nur an einer einzelnen Abladestelle abgeladen werden soll, sondern eine hohe Flexibilität bezüglich der Abladestelle gefordert ist, bietet die gute Drehbarkeit des Dreharms sowie der einfache Umbau des Transportsystems erhebliche Vorteile. Durch Drehen des Dreharms 12 kann dabei die Position der Abladevorrichtung 15, welche hier aus einem vertikal verlaufenden Schlauch besteht, der vom Dreharm nach unten bis in eine gewisse Abladehöhe reicht, problemlos verändert werden. Hierdurch kann der Beton an unterschiedlichen Stellen im Bereich des Drehwinkels des Dreharms abgeladen werden, z. B. um ein Transportfahrzeug 17 zu beladen.

Um die Drehbarkeit des Dreharms 12 zu gewährleisten, ist dieser in einer Drehdurchführung 37 angeordnet, welche über einen erstem Drehkranz 23 auf der Halterung gelagert ist und über einen zweiten Drehkranz 24 die Bandbrücke 30 trägt, so dass der Dreharm 12 sowohl gegenüber dem stationären Stützpfeiler 18 als auch gegenüber der stationären Bandbrücke 30 drehbar ist.

Die Halterung 22 ist dabei so am Stützpfeiler 18 angeordnet, dass der Dreharm höher angeordnet ist als das obere Ende des Stützpfeilers 18, so dass er über den Stützpfeiler hinweg gedreht werden kann. Hierdurch ergibt sich ein Drehwinkel von 360° des Dreharms gegenüber dem Stützpfeiler 18. Der Drehwinkel des Dreharms 12 kann dabei höchstens durch die schräg verlaufende Bandbrücke 30 eingeschränkt werden, wobei ein Anstellwinkel von 15° der Bandbrücke 30 eine Beschränkung des Drehwinkels des Dreharms 12 auf 300° bedeutet.

Der Stützpfeiler 18, ebenso wie der Stützpfeiler 38, ist dabei aus mehreren Gitterelementen aufgebaut, so dass sich die Höhe des Stützpfeilers durch Verwendung einer unterschiedlichen Anzahl von Gitterelementen verändern lässt. Die Stützpfeiler 18 und 38 bestehen dabei aus einem Fußteil 21, welches als Fundament des Stützpfeilers dient und im Boden bzw. im Beton eingelassen ist. Auf diesem sind Gitterelemente 19 und 20 angeordnet, welche den Stützpfeiler bilden. Am oberen Gitterelement 20 ist dabei die Halterung 22 angeordnet, welche den Dreharm 12 sowie die Bandbrücke 30 trägt. Auch die Bandbrücken 30 und 40 sowie der Dreharm sind jeweils aus Gitterelementen zusammengesetzt. Die Verbindung der einzelnen Gitterelemente erfolgt dabei durch Verbolzungen.

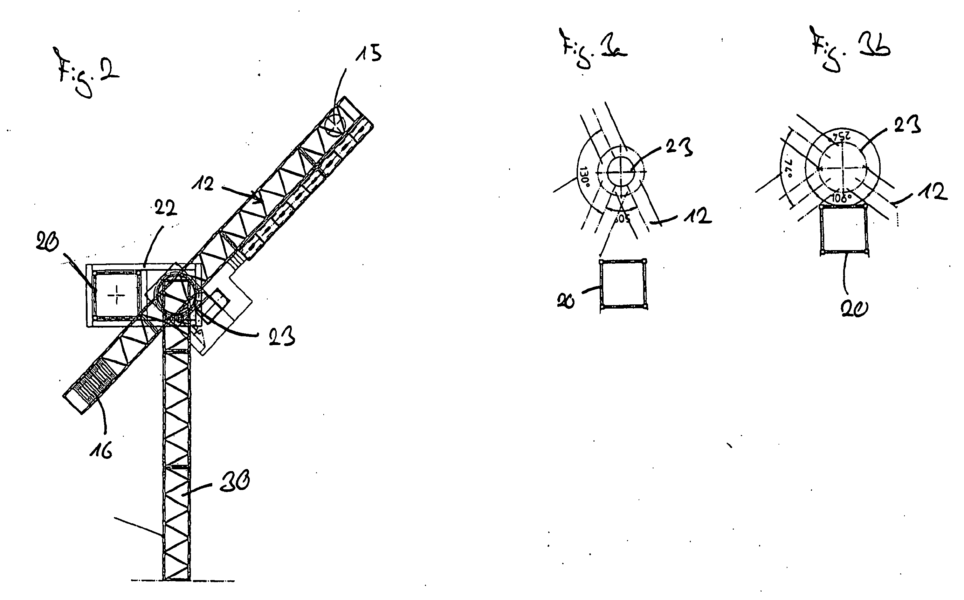

Die Drehbarkeit des Dreharms 12 ist dabei nochmals aus Figur 2, welche das erfindungsgemäße Transportsystem in einer Draufsicht zeigt, erkennbar. Die Halterung 22 ist dabei am oberen Gitterelement 20 des Stützpfeilers 18 angeordnet und umgibt diese mit einem Befestigungsarm. Die Halterung 22 weist dabei eine Plattform auf, welche neben dem Stützpfeiler angeordnet ist und welche den Dreharm 12 trägt. Der Dreharm 12 ist dabei über einen Drehkranz 23 gegenüber der Halterung und damit gegenüber dem stationären Stützpfeiler drehbar. Wie ebenfalls aus Figur 2 ersichtlich, befindet sich dabei der Drehkranz 23 außerhalb der Grundfläche des Stützpfeilers, so dass zumindest eine Position des Dreharms 12 gegeben ist, in welcher der Dreharm nicht mit der Grundfläche des Stützpfeilers überlappt. Dabei ist die Halterung 22 so am Stützpfeiler 18 angeordnet, dass sich der Dreharm oberhalb des oberen Endes des Stützpfeilers 18 befindet und sich so um 360° drehen lässt. Allenfalls kann eine schräge Anstellung der Bandbrücke 30 den Drehwinkel geringfügig begrenzen.

In Figuren 3a und 3b sind dagegen die möglichen Drehwinkel des Dreharms 12 gezeigt, wenn der Stützpfeiler nicht unterhalb des Dreharmes endet und somit den Drehbereich des Dreharms 12 begrenzt. In Figur 3a ist dabei eine Situation dargestellt, wie sie bei einem sehr weit von dem Stützpfeiler 18 angeordneten Drehkranz 21 vorliegt, was zu einem maximalen Drehwinkel von ca. 130° führt. In Figur 3b ist dagegen eine Situation gezeigt, wie sie bei der vorliegenden Erfindung dann vorliegt, wenn auf dem Gitterstück 20 noch ein weiteres Gitterelement aufgesetzt wird, so dass der Stützpfeiler 18 den Drehwinkel des Dreharms 12 begrenzt. Hierbei ergibt sich ein maximaler Drehwinkel des Dreharms 12 von ca. 75°.

Da der Dreharm in zumindest einer Drehstellung von oben gesehen neben den Stützpfeiler angeordnet ist, kann ein weiteres Element auf dem Stützpfeiler 18 aufgesetzt werden, ohne die Halterung 22 oder den Dreharm 12 demontieren zu müssen. Dies kann insbesondere zum Umbau des Transportsystems oder zum Anbringen weiterer Elemente auf dem Stützarm von großem Vorteil sein.

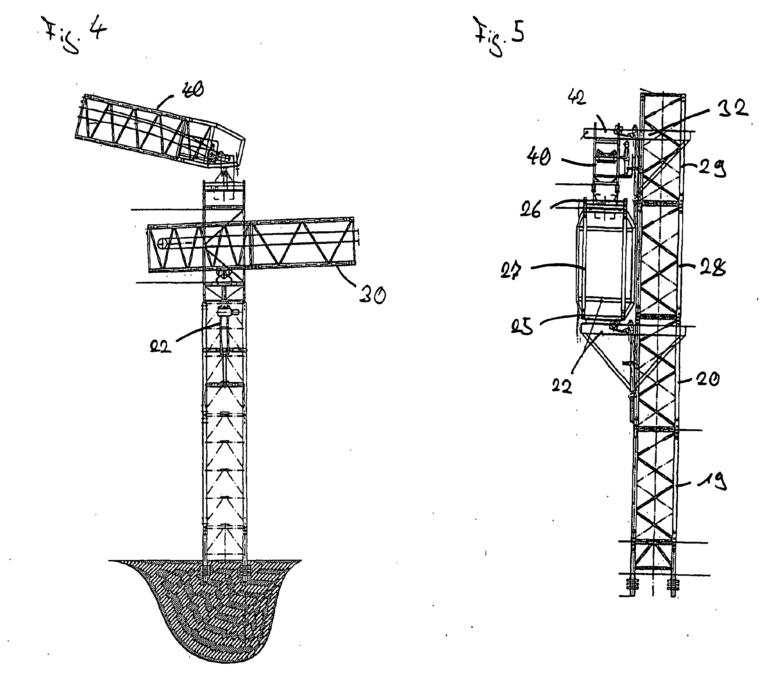

Die selben Ausführungen bezüglich der Drehbarkeit und der Vereinfachung des Umbaus gelten dabei auch für den stationären Stützpfeiler 38, welcher die Bandbrücken 30 und 40 über eine Halterung 22 trägt. Wie aus Figur 1 und Figur 4 hervorgeht, ist der Stützpfeiler 38 dabei genauso aufgebaut wie der Stützpfeiler 18, wobei am oberen Gitterelement 20 die Halterung 22 angeordnet ist, welche die Bandbrücke 30 und die Bandbrücke 40 trägt. Die beiden Bandbrücken sind dabei wiederum in zumindest einer Position von oben gesehen neben dem Stützpfeiler angeordnet. Dabei ist ein erster Drehkranz 25 vorgesehen, über welchen die Bandbrücke 30 auf der Halterung 22 lagert und gegenüber dieser und dem Stützpfeiler 38 drehbar ist. Weiterhin ist ein zweiter Drehkranz 26 vorgesehen, über welchen die Bandbrücke 40 gelagert ist, so dass die Bandbrücke 30 auch gegenüber der Bandbrücke 40 drehbar ist. Hierfür ist eine Drehdurchführung 27 vorgesehen, durch welche die Bandbrücke 30 hindurchgeht, und welche über den ersten Drehkranz 25 auf der Halterung 22 lagert und auf welcher über den weiten Drehkranz 26 die Bandbrücke 40 lagert. Durch die drehbare Lagerung der Bandbrücke 30 ist es z. B. möglich, diese von dem Stützpfeiler 18 auf einen weiteren, nicht gezeigten Stützpfeiler umzulegen, ohne hierfür die am Stützpfeiler 28 montierten Vorrichtungen zu demontieren. Hierzu ist die Bandbrücke 30 verschiebbar auf Rollen 45 in der Drehdurchführung 27 gelagert. Hierdurch kann die Bandbrücke 30 auch auf Stützpfeilern aufgesetzt werden, welche nicht den gleichen Abstand zum Stützpfeiler 38 aufweisen wie der Stützpfeiler 18.

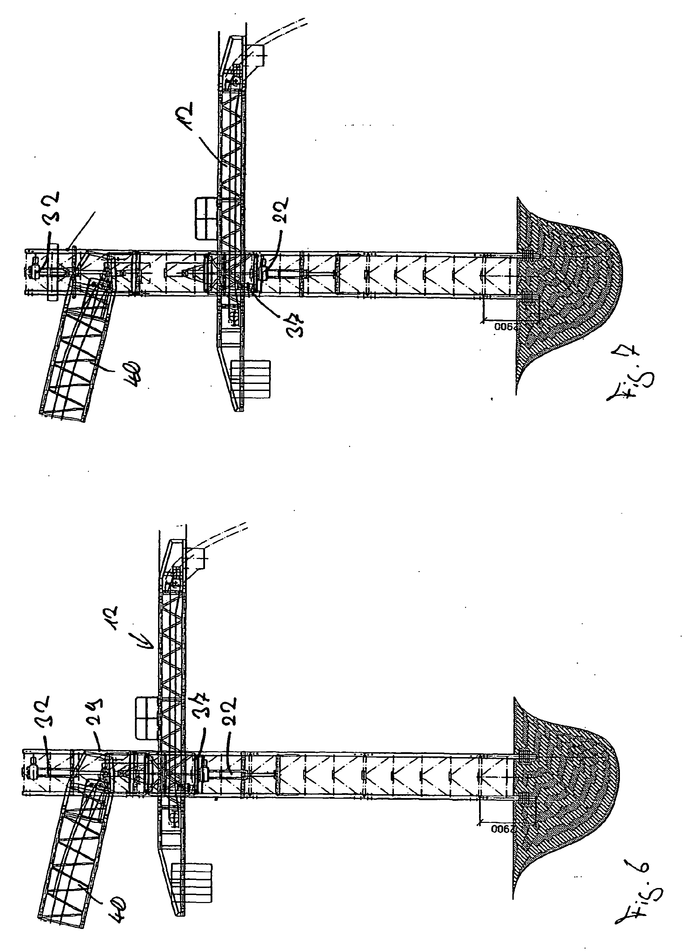

Die Bandbrücke 30 kann jedoch auch vom Stützpfeiler 38 demontiert werden, z. B. um dort den Dreharm 12 zu montieren, wie dies nun anhand von Figuren 5 bis 7 dargestellt wird. Dabei werden zunächst auf das obere Ende des Stützpfeilers 38, das heißt auf das Gitterelement 20, weitere Gitterelemente 28 und 29 montiert, um den Stützpfeiler 38 über die Halterung 22 hinaus nach oben hin zu verlängern. Durch die seitliche Anordnung der Bandbrücken 30 und 40 auf der Halterung 22 ist diese Verlängerung des Stützpfeilers 38 problemlos möglich. Eine weitere Halterung 32 wird am Stützpfeiler oberhalb der Bandbrücke 40 montiert. Die Halterung 32 trägt dabei eine Hebevorrichtung 42, über welche die Bandbrücke 40 angehoben wird. Nun kann die Bandbrücke 30 entfernt und die Drehdurchführung 27 demontiert werden. Nach der Demontage der Drehdurchführung 27 wird auf der Halterung 22 die anders aufgebaute Drehdurchführung 37 für den Dreharm 12 montiert, wie dies in Figur 7 gezeigt ist. Daraufhin kann die Bandbrücke 40 über die Hebevorrichtung abgesenkt und auf dem Drehkranz 24 der Drehdurchführung 27 des Dreharms 12 abgesetzt werden. Alternativ kann auch, wie dies in Figur 6 gezeigt ist, die Halterung 22 angehoben und in erhöhter Position am Stützpfeiler montiert werden.

Vorteilhafterweise werden nach dem Umbau des Transportsystems die zusätzlichen Stützelemente 28 und 29, welche oberhalb der Halterung 22 angeordnet sind, wieder abgebaut, um wieder die komplette Drehbarkeit des Dreharms 12 bzw. der Bandbrücke 30 zu gewährleisten.

Der Rückumbau erfolgt dann entsprechend in umgekehrter Weise, wobei die Bandbrücke 40 wiederum angehoben und die Drehdurchführung 37 des Dreharms durch die Drehdurchführung 27 der Bandbrücke 30 ersetzt wird.

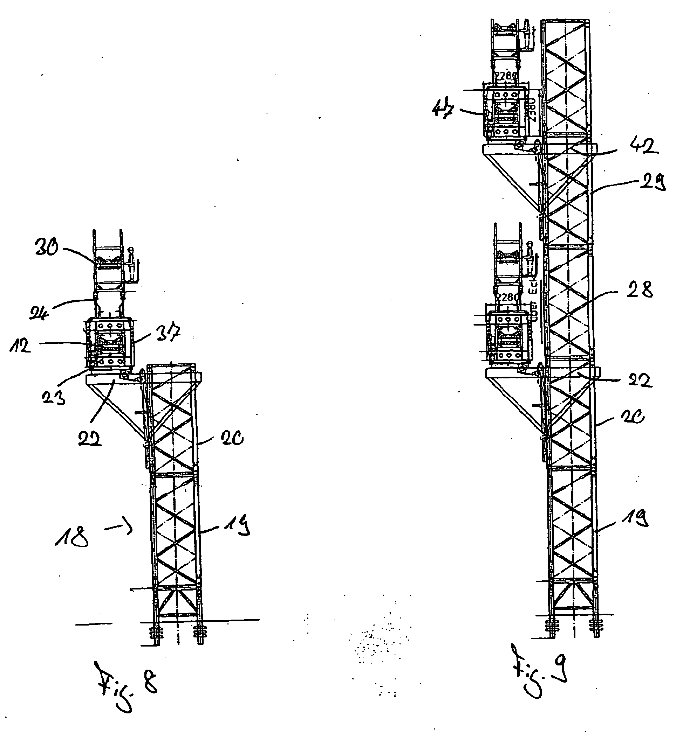

In Figur 8 ist nun nochmals die Anordnung des Dreharms 12 am Stützpfeiler 18 gezeigt. Dabei ist die Halterung 22 am oberen Gitterelement 20 des Stützpfeilers 18 so angeordnet, dass sich der Dreharm oberhalb der Oberkante des Stützpfeilers 18 befindet und über diesen hinweggedreht werden kann. Um die Drehbarkeit des Dreharms 12 zu gewährleisten, ist der Dreharm 12 in der Drehdurchführung 37 angeordnet, welche über den Drehkranz 23 auf der Halterung 22 neben dem Stützpfeiler 18 angeordnet ist. Auf der Drehdurchführung 37 ist dabei ein weiterer Drehkranz 24 vorgesehen, welche die Bandbrücke 30 trägt. Die Bandbrücke ist so drehbar über die Drehdurchführung 37 auf der Halterung 22 und damit dem Stützpfeiler 18 gelagert.

Dadurch, dass der Dreharms neben dem Stützpfeiler 18 gelagert ist, können auf diesem weitere Gitterelemente aufgebaut werden, welche die Halterung 22 sowie den Dreharm 12 und die Bandbrücke 30 überragen. Dies ist in Figur 9 gezeigt, in welcher Gitterelemente 28 und 29 auf dem Stützpfeiler 18 montiert wurden. Dabei wurde an dem Gitterelement 29 oberhalb des Dreharms 12 eine weitere Halterung 42 befestigt, welche eine weitere Drehdurchführung 47 mit einem weiteren Dreharm trägt. Hierdurch lassen sich auch kompliziertere Transportsysteme realisieren. Auch kann eine Halterung 22 für den Dreharm oder eine oder mehrere Bandbrücken in unterschiedlichen Höhen am Stützpfeiler montiert werden. Hierfür handelt es sich bei der Halterung 22 um eine Kletterstütze.

Ebenso ist es möglich, oberhalb einer Halterung, welche der Lagerung zweier Bandbrücken oder eines Dreharms dient, auf einer weiteren Halterung oder auf dem Stützpfeiler selber z. B. einen Kran anzuordnen, welcher weitere Transportaufgaben übernehmen kann.

## Patentansprüche

1. Transportsystem zum Transport von Schüttgut, insbesondere von Beton, mit einem Transportband (1, 2, 3) zur Beförderung des Schüttguts zu einer Abladestelle, wobei ein um eine vertikale Drehachse drehbarer Dreharm (12) vorgesehen ist, welcher Schüttgut zu seinem freien Ende transportiert und dort ablädt, wobei der Dreharm an einer Halterung gelagert ist, welche so an einem stationären Stützpfeiler (18) angeordnet oder anordenbar ist, dass die Drehachse des Dreharms exzentrisch zum Stützpfeiler verläuft, wobei vorteilhafterweise der Dreharm von oben gesehen in wenigstens einer Drehstellung neben dem Stützpfeiler angeordnet ist,
**dadurch gekennzeichnet,**
**dass** der Dreharm (12) in einer Drehdurchführung angeordnet ist, welche über einen ersten Drehkranz (23) auf der Halterung (22) gelagert ist und über einen zweiten Drehkranz (24) ein Ende einer Bandbrücke (30, 40) trägt, die das Schüttgut zum Dreharm (12) transportiert.

2. Transportsystem nach Anspruch 1, wobei die Halterung (22) so am Stützpfeiler (18) angeordnet oder anordenbar ist, dass der Dreharm (12) höher angeordnet ist als das obere Ende des Stützpfeilers (18), so dass er über den Stützpfeiler gedreht werden kann.

3. Transportsystem nach einem der vorangegangenen Ansprüche, wobei der Stützpfeiler (18) aus mehreren Elementen, insbesondere aus mehreren Gitterelementen (19, 20) aufgebaut ist, so dass die Höhe des Stützpfeilers durch Aufsetzen weiterer Elemente vergrößert werden kann.

4. Transportsystem nach einem der vorangegangenen Ansprüche, wobei mindestens ein Element (19, 20) auf dem Stützpfeiler (18) aufgesetzt werden kann, ohne die Halterung und/oder den Dreharm zu demontieren.

5. Transportsystem nach einem der vorangegangenen Ansprüche, mit einem zweiten Stützpfeile (18), an welchem eine zweite Halterung (22) angeordnet ist, wobei die Halterung die Enden zweier Bandbrücken (30, 40) trägt.

6. Transportsystem nach Anspruch 5, wobei die eine Bandbrücke (30) in einer Drehdurchführung (27) auf der zweiten Halterung (22) angeordnet ist, so dass diese Bandbrücke gegenüber der zweiten Halterung und/oder der anderen Bandbrücke um eine vertikale Drehachse drehbar ist.

7. Transportsystem nach Anspruch 5 oder 6, wobei die zweite Halterung (22) für die Bandbrücken (30, 40) baugleich zur Halterung für den Dreharm (12) ist.

8. Transportsystem nach einem der vorangegangenen Ansprüche, mit einer Hebevorrichtung zum Anheben des Dreharms (12) und/oder der Bandbrücke (30, 40).

9. Transportsystem nach Anspruch 8, wobei die Hebevorrichtung an einem Stützpfeiler (18) anordenbar ist, insbesondere an einem Element des Stützpfeilers, welches hierfür am oberen Ende des Stützpfeilers aufsetzbar ist.

10. Verfahren zum Umbau eines Transportsystems nach einem der Ansprüche 1 bis 9 zum Transport von Schüttgut, insbesondere von Beton, mit einer Bandbrücke (30, 40) und einem Dreharm (12) mit einem Transportband zur Beförderung des Schüttguts, wobei die Bandbrücke (30, 40) und/oder der Dreharm (12) seitlich neben dem Stützpfeiler angeordnet ist und wobei das Anheben der Bandbrücke und/oder des Dreharms über eine am Stützpfeiler oberhalb der Bandbrücke und/oder des Dreharms angeordneten Hebeeinrichtung erfolgt.

11. Verfahren nach Anspruch 10, wobei zum Anheben der Bandbrücke (30, 40) und/oder des Dreharms (12) mindestens ein Element, insbesondere ein Gitterelement (28, 29), auf den Stützpfeiler (38) aufgesetzt wird, um diesen über die Halterung hinaus zu verlängern und die Hebeeinrichtung an dem Element angeordnet ist.

12. Verfahren nach Anspruch 11, wobei das Element (28, 29) nach dem Umbau wieder abgebaut wird.

13. Verfahren nach einem der Ansprüche 10 bis 12, wobei nach dem Anheben der Bandbrücke (20, 30) und/oder des Dreharms (12) eine Drehdurchführung (27) montiert, demontiert und/oder ausgetauscht wird und die Bandbrücke und/oder der Dreharm daraufhin wieder abgesenkt wird.

## Claims

1. A transport system for the transport of bulk goods, in particular of concrete, having a transport belt (1, 2, 3) for the conveying of the bulk goods to an unloading point, with a rotary arm (12) being provided which is rotatable about a vertical axis of rotation and which transports bulk goods to its free end and unloads it there, wherein the rotary arm is supported at a holder which is or can be arranged at a stationary support column (18) such that the axis of rotation of the rotary arm extends eccentrically to the support column, with the rotary arm advantageously being arranged next to the support column, viewed from above, in at least one rotational position,
**characterized in that**
the rotary arm (12) is arranged in a rotary union which is supported via a first rotating assembly (23) on the holder (22) and bears via a second rotating assembly (24) an end of a belt bridge (30, 40) which transports the bulk goods to the rotary arm (12).

2. A transport system in accordance with claim 1, wherein the holder (22) is or can be arranged at the support column (18) such that the rotary arm (12) is arranged higher than the upper end of the support column (18) so that it can be rotated above the support column.

3. A transport system in accordance with one of the preceding claims, wherein the support column (18) comprises a plurality of elements, in particular a plurality of lattice elements (19, 20), so that the height of the support column can be increased by placing on further elements.

4. A transport system in accordance with one of the preceding claims, wherein at least one element (19, 20) can be placed onto the support column (18) without dismantling the holder and/or the rotary arm.

5. A transport system in accordance with one of the preceding claims, comprising a second support column (18) at which a second holder (22) is arranged, wherein the holder bears the ends of two belt bridges (30, 40).

6. A transport system in accordance with claim 5, wherein the one belt bridge (30) is arranged in a rotary union (27) on the second holder (22) so that this belt bridge is rotatable about a vertical axis of rotation with respect to the second holder and/or to the other belt bridge.

7. A transport system in accordance with either of claims 5 or 6, wherein the second holder (22) for the belt bridges (30, 40) is of the same construction as the holder for the rotary arm (12).

8. A transport system in accordance with one of the preceding claims, comprising a lifting apparatus for the lifting of the rotary arm (12) and/or of the belt bridge (30, 40).

9. A transport system in accordance with claim 8, wherein the lifting apparatus can be arranged at a support column (18), in particular at an element of the support column, which can be set on the upper end of the support column for this purpose.

10. A method for the rebuilding of a transport system in accordance with one of the claims 1 to 9 for the transport of bulk goods, in particular of concrete, comprising a belt bridge (30, 40) and a rotary arm (12) having a transport belt for the conveying of the bulk goods, wherein the belt bridge (30, 40) and/or the rotary arm (12) is arranged to the side next to the support column and wherein the lifting of the belt bridge and/or of the rotary arm takes place via a lifting device arranged at the support column above the belt bridge and/or the rotary arm.

11. A method in accordance with claim 10, wherein at least one element, in particular a lattice element (28, 29), for the lifting of the belt bridge (30, 40) and/or the rotary arm (12) is placed onto the support column (38) to extend it beyond the holder and the lifting device is arranged at the element.

12. A method in accordance with claim 11, wherein the element (28, 29) is removed again after the rebuilding.

13. A method in accordance with one of the claims 10 to 12, wherein, after the lifting of the belt bridge (20, 30) and/or of the rotary arm (12), a rotary union (27) is mounted, dismantled and/or replaced and the belt bridge and/or the rotary arm is thereupon lowered again.

## Revendications

1. Système de transport de matériau en vrac, en particulier de béton, comprenant une bande transporteuse (1, 2, 3) pour le transport du matériau en vrac jusqu'à un lieu de déchargement, un bras rotatif (12) pouvant tourner autour d'un axe de rotation vertical étant prévu, lequel transporte du matériau en vrac jusqu'à son extrémité libre et y décharge celui-ci, le bras rotatif étant monté sur un support qui est ou peut être agencé sur un pilier de soutien immobile (18) de sorte que l'axe de rotation du bras rotatif s'étend de manière excentrique par rapport au pilier de soutien, le bras rotatif, vu d'en haut, étant agencé avantageusement à côté du pilier de soutien dans au moins une position de rotation,
**caractérisé en ce que**
le bras rotatif (12) est agencé dans un passage tournant qui est monté sur le support (22) par l'intermédiaire d'une première tourelle (23) et qui porte par l'intermédiaire d'une seconde tourelle (24) une extrémité d'un pont convoyeur (30, 40) qui transporte le matériau en vrac jusqu'au bras rotatif (12).

2. Système de transport selon la revendication 1, le support (22) étant ou pouvant être agencé sur le pilier de soutien (18) de telle sorte que le bras rotatif (12) est agencé plus haut que l'extrémité supérieure du pilier de soutien (18) de sorte qu'il peut tourner au-dessus du pilier de soutien.

3. Système de transport selon l'une des revendications précédentes, le pilier de soutien (18) étant constitué de plusieurs éléments, en particulier plusieurs éléments de treillis (19, 20) de sorte que la hauteur du pilier de soutien peut être augmentée en ajoutant d'autres éléments.

4. Système de transport selon l'une des revendications précédentes, au moins un élément (19, 20) pouvant être posé sur le pilier de soutien (18) sans démonter le support et/ou le bras rotatif.

5. Système de transport selon l'une des revendications précédentes, comprenant un second pilier de soutien (18) sur lequel est agencé un second support (22), le support portant les extrémités de deux ponts convoyeurs (30, 40).

6. Système de transport selon la revendication 5, le pont convoyeur (30) étant agencé dans un passage tournant (27) sur le second support (22) de sorte que ce pont convoyeur peut tourner autour d'un axe de rotation vertical par rapport au second support et/ou à l'autre pont convoyeur.

7. Système de transport selon la revendication 5 ou 6, le second support (22) pour les ponts convoyeurs (30, 40) étant de construction identique au support pour le bras rotatif (12).

8. Système de transport selon l'une des revendications précédentes, comprenant un dispositif de levage pour lever le bras rotatif (12) et/ou le pont convoyeur (30, 40).

9. Système de transport selon la revendication 8, le dispositif de levage pouvant être agencé sur un pilier de soutien (18), en particulier sur un élément du pilier de soutien qui peut être posé à cet effet sur l'extrémité supérieure du pilier de soutien.

10. Procédé de transformation d'un système de transport selon l'une des revendications 1 à 9 pour le transport de matériau en vrac, en particulier de béton, comprenant un pont convoyeur (30, 40) et un bras rotatif (12) comprenant une bande transporteuse pour transporter le matériau en vrac, le pont convoyeur (30, 40) et/ou le bras rotatif (12) étant agencé à côté du pilier de soutien et le levage du pont convoyeur et/ou du bras rotatif étant effectué par un dispositif de levage agencé sur le pilier de soutien au-dessus du pont convoyeur et/ou du bras rotatif.

11. Procédé selon la revendication 10, au moins un élément, en particulier un élément de treillis (28, 29) étant posé sur le pilier de soutien (38) pour le levage du pont convoyeur (30, 40) et/ou du bras rotatif (12), pour prolonger ledit pilier de soutien au-delà du support et le dispositif de levage étant agencé sur l'élément.

12. Procédé selon la revendication 11, l'élément (28, 29) étant à nouveau démonté après la transformation.

13. Procédé selon l'une des revendications 10 à 12, un passage tournant (27) étant monté, démonté et/ou remplacé après le levage du pont convoyeur (20, 30) et/ou du bras rotatif (12) et le pont convoyeur et/ou le bras rotatif étant ensuite baissé de nouveau.
